# EUROPEAN PATENT APPLICATION

(11) **EP 4 819 482 A1**
(43) Date of publication of application: **07.10.2026**
(21) Application number: 26161602.3
(22) Date of filing: 02.03.2026
(51) Int. Cl.: H02P 29/62, E02F 9/20, F16H 57/04, F28F 13/00

(54) **DRIVE SYSTEM FOR WORK MACHINE**

(30) Priority: 03.04.2025 JP 2025061855
(71) Applicant: NABTESCO CORPORATION, Chiyoda-ku Tokyo 102-0093 (JP)
(72) Inventor: Oka, Daisuke, Chiyoda-ku, Tokyo, 102-0093 (JP); Toyoda, Takashi, Chiyoda-ku, Tokyo, 102-0093 (JP); Ida, Yasuhito, Chiyoda-ku, Tokyo, 102-0093 (JP)
(74) Representative: Grünecker Patent- und Rechtsanwälte PartG mbB

(57) **Abstract**

A drive system for an excavator, which is a work machine, includes an electric motor, a speed reducer, a control device, and a temperature sensor TS. The speed reducer is coupled to the electric motor. The speed reducer is configured to amplify torque of the electric motor and output the amplified torque to a driven object. The control device supplies electric power to the electric motor. The temperature sensor TS detects a temperature of the speed reducer. When the temperature detected by the temperature sensor TS is equal to or lower than a prescribed temperature, the control device executes a warm-up process to supply electric power to the electric motor. The control device executes the warm-up process while maintaining a rotation angle of an output shaft of the speed reducer within a predetermined range.

## Description

### CROSS-REFERENCE TO RELATED APPLICATIONS

This application is based on and claims the benefit of priority from Japanese Patent Application Serial No. 2025-061855 (filed on April 3, 2025), the contents of which are hereby incorporated by reference in its entirety.

### TECHNICAL FIELD

The present disclosure relates to a drive system for a work machine.

### BACKGROUND

A hydraulic excavator, which is a work machine, disclosed in Japanese Patent Application Publication No. 2024-097700, includes an undercarriage and an upper slewing body that are objects to be driven. In the hydraulic excavator, the undercarriage is driven by using a hydraulic motor for traveling and a speed reducer. In the hydraulic excavator, the upper slewing body is rotated relative to the undercarriage by using a hydraulic motor for slewing and a speed reducer.

In a drive system for a work machine that drives the work machine, lubrication performance of a lubricant inside the speed reducer may deteriorate as the temperature of the speed reducer decreases. Therefore, in the drive system for a work machine, it is desired to quickly warm the lubricant inside the speed reducer to reduce a load applied to the speed reducer when rotating a driven object.

### SUMMARY

A drive system for a work machine according to one aspect of the invention includes: an electric motor; a speed reducer coupled to the electric motor, the speed reducer amplifying torque of the electric motor and outputting the amplified torque to a driven object; a control device controlling supply of electric power to the electric motor; and a temperature sensor detecting a temperature of the speed reducer, wherein the control device is configured to execute a warm-up process when the temperature detected by the temperature sensor is equal to or lower than a prescribed temperature, and wherein, in the warm-up process, electric power is supplied to the electric motor to cause the electric motor to generate heat while maintaining a rotation angle of an output shaft of the speed reducer within a predetermined range.

In the drive system for the work machine, the control device executes the warm-up process to cause the electric motor to generate heat while restricting rotation of the driven object within the predetermined range. Heat from the electric motor is transferred to the speed reducer coupled to the electric motor. The drive system for a work machine can supply electric power to the electric motor until the speed reducer reaches the prescribed temperature, while maintaining the rotation of the driven object within the predetermined range. That is, by causing the electric motor to generate heat, the drive system can raise the temperature of the speed reducer to the prescribed temperature or higher. As described above, the drive system for the work machine can reduce a load on the speed reducer.

In the above drive system, the speed reducer includes a housing. The electric motor includes a heat transfer shaft, the heat transfer shaft extending coaxially with an output shaft of the electric motor and passing through the output shaft. The heat transfer shaft extends into an interior of the housing, and thermal conductivity of the heat transfer shaft is higher than thermal conductivity of the output shaft of the electric motor.

In the above drive system, the heat transfer shaft is switchable between an inserted state in which a distal end of the heat transfer shaft is situated inside the housing and a non-inserted state in which the distal end is situated outside the housing. The control device may switch the heat transfer shaft to the inserted state during execution of the warm-up process.

The drive system for a work machine further includes a thermal transistor interposed between the electric motor and the speed reducer. The thermal transistor is switchable between a high thermal conductivity state and a low thermal conductivity state, thermal conductivity of the thermal transistor in the high thermal conductivity state is higher than that of a material of the output shaft of the electric motor, and the thermal conductivity of the thermal transistor in the low thermal conductivity state is lower than the thermal conductivity in the high thermal conductivity state. The control device may switch the thermal transistor to the high thermal conductivity state during execution of the warm-up process.

In the above drive system, a brake device switchable between a restriction state in which the brake device contacts a restriction target shaft to restrict rotation of the restriction target shaft and an allowable state in which the brake device allows rotation of the restriction target shaft, the restriction target shaft being the output shaft of the electric motor or an output shaft of the speed reducer, wherein the control device may switch the brake device to the restriction state during execution of the warm-up process.

The above drive system further includes a plurality of the electric motors; a plurality of the speed reducers corresponding to the plurality of the electric motors, respectively; and a plurality of the temperature sensors corresponding to the plurality of the speed reducers, respectively. The control device may execute the warm-up process for each of the electric motors independently.

The drive system further includes a clutch mechanism interposed between the electric motor and the speed reducer, the clutch mechanism being switchable between a disengaged state in which the electric motor and the speed reducer are disconnected from each other and an engaged state in which transmission of torque from the electric motor to the speed reducer is allowed. The control device may switch the clutch mechanism to the disengaged state during execution of the warm-up process.

### ADVANTAGEOUS EFFECTS

The drive system can reduce a load on the speed reducer.

### BRIEF DESCRIPTION OF THE DRAWINGS

Fig. 1 is a schematic side view of an excavator.
Fig. 2 is a schematic top view of the excavator.
Fig. 3 illustrates a drive system.
Fig. 4 illustrates a single drive unit in the drive system.
Fig. 5 illustrates a single drive unit in a drive system of a second embodiment.
Fig. 6 illustrates a single drive unit in a drive system of a third embodiment.

### DESCRIPTION OF THE EMBODIMENTS

### <First Embodiment>

One embodiment of a drive system for a work machine will be described. In this embodiment, the drive system for the work machine is described by concretely specifying it as the drive system for an excavator. That is, in this embodiment, the work machine is an excavator. Hereinafter, the drive system for the excavator is simply referred to as the "drive system." The drawings may show the components in an enlarged manner for the sake of better intelligibility. The dimensions of the components and the ratios thereof may be different from those of the actual components, and among the drawings.

### <Overall View of Excavator>

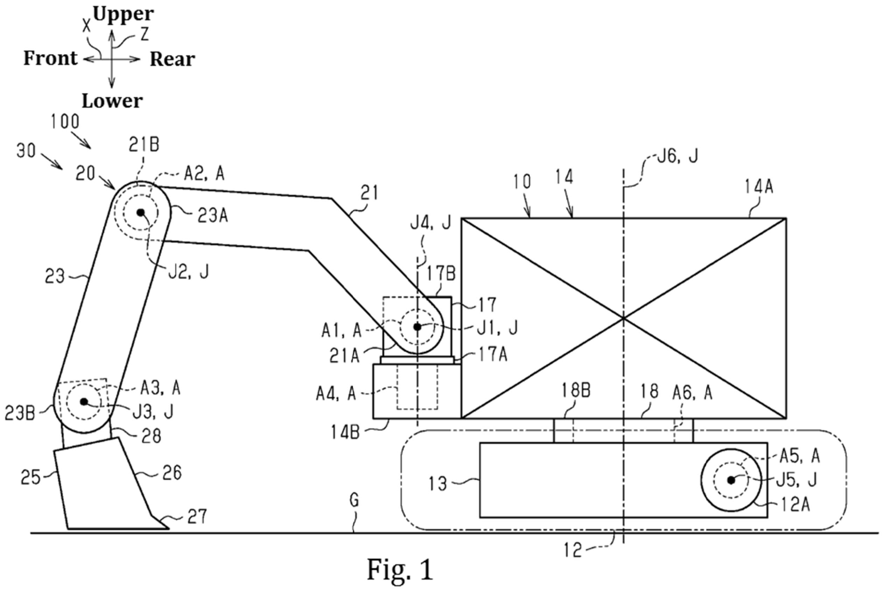

As shown in Fig. 1, the excavator 100 includes a main body 10 and a work attachment 20. Furthermore, the excavator 100 includes a drive system 30. The drive system 30 of the excavator 100 drives the main body 10 and the work attachment 20.

### <Main Body>

The main body 10 includes a lower structure 13, an upper structure 14, and a swing bracket 17. The main body 10 constitutes a chassis of the excavator 100. The lower structure 13 is a portion of the main body 10 that contacts the ground G. The upper structure 14 is located on the opposite side to the ground surface G with respect to the lower structure 13.

In the main body portion 10, the lower structure 13 and the upper structure 14 are arranged in one direction. In this embodiment, the direction from the lower structure 13 toward the upper structure 14 in the main body 10 is the upper (upward) direction, and the opposite direction is the lower (downward) direction. A specific one of the directions orthogonal to the upper direction is the front direction, and the opposite direction is the rear direction. The direction that is orthogonal to both of the upper and front directions faces the left and right directions, which are opposite to each other. The front and rear directions may be collectively referred to as X direction. The left and right directions may be collectively referred to as Y direction. The upper and lower directions may be collectively referred to as Z direction.

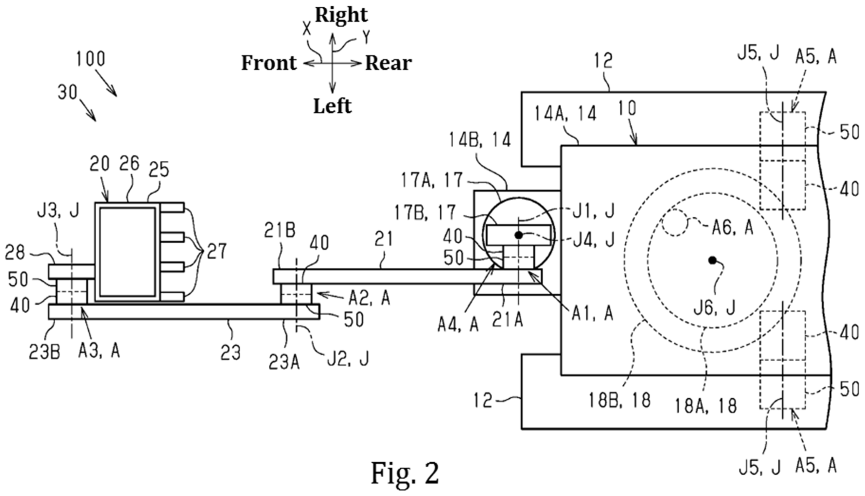

As shown in Figs. 1 and 2, the lower structure 13 has, for example, a rectangular parallelepiped shape. The main body 10 includes a pair of traveling units 12 provided in the lower structure 13. The excavator 100 travels by means of the pair of travel units 12. In Fig. 1, only one of the pair of traveling units 12 is illustrated by a double-dotted chain line. Both of the pair of traveling units 12 are connected to the lower structure 13. The traveling unit 12 includes a crawler and a traveling roller 12A that causes the crawler to circulate. The excavator 100 travels by causing the crawler to circulate while being in contact with the ground. The traveling roller 12A rotates about a travel axis J5 as an axial center.

The upper structure 14 includes a housing main portion 14A and a housing front portion 14B. The main housing portion 14A constitutes a majority of the upper structure 14. The main housing portion 14A is a portion of the upper structure 14 that includes a cabin (not shown). The cabin is a portion in which an operator who operates the excavator 100 sits. The main housing portion 14A accommodates various devices for operating the excavator 100. The housing front portion 14B is located on a front side of the housing main portion 14A. The housing front portion 14B is fixed to a front surface of the housing main portion 14A.

As shown in Fig. 1, the main body 10 includes a slewing bearing 18. The slewing bearing 18 is interposed between the lower structure 13 and the upper structure 14. In Fig. 1, the width of the slewing bearing 18 is shown in an exaggerated manner in the Z direction.

As shown in Fig. 2, the slewing bearing 18 has an annular body with a center axis defined as a slewing axis J6. The slewing bearing 18 includes an inner race 18A fixed to the lower structure 13, an outer race 18B fixed to the upper structure 14, and a plurality of rolling elements (not shown). The center axis of each of the inner race 18A and the outer race 18B is the slewing axis J6. The inner race 18A and the outer race 18B are coupled via the plurality of rolling elements such that one of the inner race 18A or the outer race 18B is rotatable relative to the other. Accordingly, one of the upper structure 14 or the lower structure 13 is configured to be rotatable relative to the other.

As shown in Figs. 1 and 2, the swing bracket 17 is disposed on the housing front portion 14B. The swing bracket 17 includes a first swing wall 17A and a second swing wall 17B. The first swing wall 17A is coupled to the housing front portion 14B. The first swing wall 17A has a disk shape with a thickness direction in the Z-direction. The second swing wall 17B protrudes upward from an upper surface of the first swing wall 17A. The second swing wall 17B has a disk shape with a thickness direction in the Y-direction.

The first swing wall 17A, together with the second swing wall 17B, is rotatable relative to the housing front portion 14B about a fourth axis J4 extending in the Z-direction. The fourth axis J4 is substantially parallel to the slewing axis J6.

### <Work Attachment>

As shown in Fig. 1, the work attachment 20 includes a boom 21, an arm 23, and a bucket 25.

The boom 21 is situated on the front side of the housing main body 14A. The boom 21 has a long plate-like shape or a columnar shape. The boom 21 includes a first boom end 21A coupled to the second swing wall 17B, and a second boom end 21B situated opposite to the first boom end 21A in a longitudinal direction of the boom 21. The first boom end 21A is aligned with the second swing wall 17B in the thickness direction of the second swing wall 17B.

As shown in Fig. 2, the boom 21 is rotatable relative to the second swing wall 17B about a center axis that is an axis extending in a direction in which the second swing wall 17B and the first boom end 21A are aligned. Hereinafter, the axis about which the boom 21 rotates relative to the second swing wall 17B is referred to as a "first axis J1." The first axis J1 extends in a direction substantially perpendicular to the slewing axis J6.

The arm 23 is coupled to the second boom end 21B. The arm 23 has a long plate-like shape or a columnar shape. The arm 23 includes a first arm end 23A coupled to the second boom end 21B, and a second arm end 23B situated opposite to the first arm end 23A in a longitudinal direction of the arm 23.

The arm 23 is rotatable relative to the boom 21 about a center axis extending in a direction in which the first arm end 23A and the second boom end 21B are aligned. Hereinafter, the center axis of the rotation of the arm 23 relative to the boom 21 is referred to as a "second axis J2." The second axis J2 extends substantially parallel to the first axis J1.

The bucket 25 is disposed in the vicinity of the second arm end 23B of the arm 23. The bucket 25 includes a bucket body 26, a plurality of teeth 27, and a bucket coupling wall 28. The bucket body 26 is a box-like body opening in one direction. The plurality of tooth 27 protrude from one of opening edges of the bucket body 26. In this embodiment, there are four teeth 27. The bucket coupling wall 28 projects from a portion of an outer wall of the bucket body 26 situated on an opposite side to the teeth 27 across the opening. The bucket coupling wall 28 has a plate-like body.

At the bucket coupling wall 28, the bucket 25 is aligned with and coupled to the second arm end 23B in a thickness direction of the bucket coupling wall 28. The bucket coupling wall 28 is rotatable about a center axis extending in a direction in which the second arm end 23B and the bucket coupling wall 28 are aligned. That is, the bucket 25 is rotatable relative to the arm 23. Hereinafter, the center axis of rotation of the bucket 25 relative to the arm 23 is referred to as a "third axis J3." The third axis J3 extends substantially parallel to each of the first axis J1 and the second axis J2.

### <Drive System>

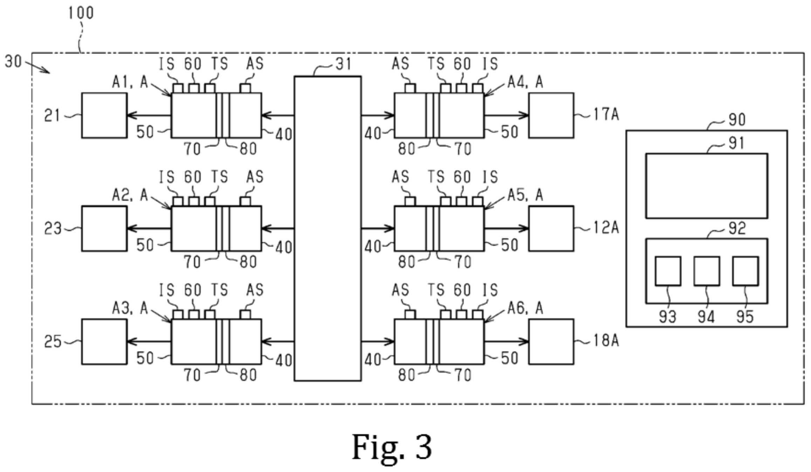

As shown in Fig. 3, the drive system 30 includes a battery 31, a plurality of drive units A, and a control device 90. Furthermore, each drive unit A includes a plurality of electric motors 40, a plurality of speed reducers 50, a plurality of temperature sensors TS, a plurality of impact sensors IS, a plurality of angle sensors AS, and a plurality of cooling devices 60. The drive unit A further includes a plurality of brake devices 70 and a plurality of clutch mechanisms 80. In the embodiment, the electric motor 40, the speed reducer 50, the temperature sensor TS, the impact sensor IS, the angle sensor AS, the cooling device 60, the brake device 70, and the clutch mechanism 80 are unitized so as to form a single body as the drive unit A. The drive system 30 drives the excavator 100 through the cooperation of the plurality of drive units A and the control device 90.

The drive system 30 includes, as the plurality of drive units A, a first drive unit A1, a second drive unit A2, a third drive unit A3, a fourth drive unit A4, a travel drive unit A5, and a slewing drive unit A6. Hereinafter, configurations common to the respective drive units A will be collectively described as "the drive unit A," and when it is necessary to distinguish between the drive units A, they will be described as the first drive unit A1 through the slewing drive unit A6.

As shown in Fig. 2, the first drive unit A1 is interposed between the second swing wall 17B and the first boom end 21A. The first drive unit A1 rotates the boom 21 relative to the second swing wall 17B. The second drive unit A2 is interposed between the second boom end 21B and the first arm end 23A. The second drive unit A2 rotates the arm 23 relative to the boom 21. The third drive unit A3 is interposed between the second arm end 23B and the bucket coupling wall 28. The third drive unit A3 rotates the bucket 25 relative to the second arm end 23B. The travel drive unit A5 is disposed in the traveling unit 12. The travel drive unit A5 rotates the traveling roller 12A relative to the lower structure 13. Note that although the excavator 100 includes a pair of the travel drive units A5, Fig. 3 illustrates only one of the pair of travel drive units A5.

As shown in Fig. 1, the fourth drive unit A4 is disposed at the housing front portion 14B. The fourth drive unit A4 rotates the first swing wall 17A relative to the housing front portion 14B. The slewing drive unit A6 is interposed between the lower structure 13 and the upper structure 14. The slewing drive unit A6 rotates the upper structure 14 relative to the lower structure 13.

### <Electric Motor and Related Elements>

The following describes the configuration of each of the plurality of drive units A shown in Fig. 3. Note that the description regarding the drive unit A applies similarly to the first drive unit A1, the second drive unit A2, the third drive unit A3, the fourth drive unit A4, the travel drive unit A5, and the slewing drive unit A6.

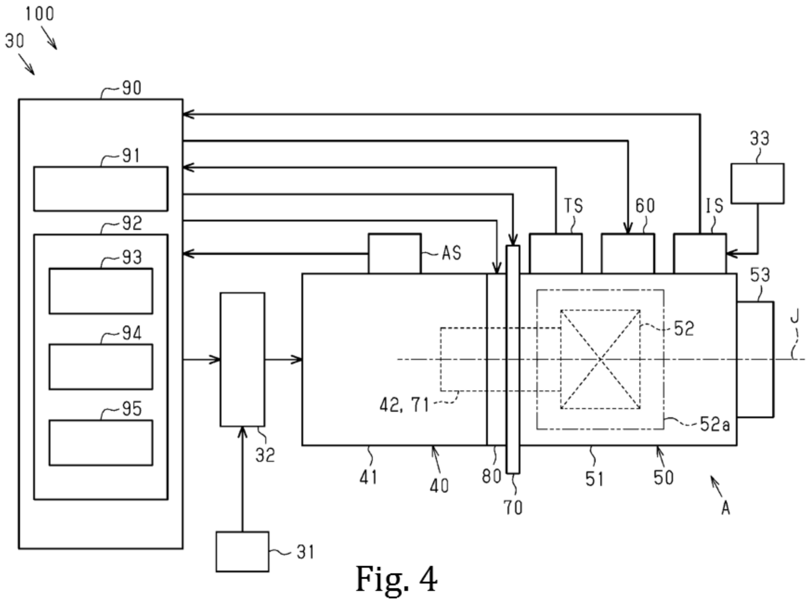

As shown in Fig. 4, the drive unit A includes an inverter 32. The inverter 32 converts DC power supplied from the battery 31 into AC power and outputs the AC power. The drive unit A is connected to the electric motor 40. The inverter 32 may be integrated with the electric motor 40. Fig. 4 is a diagram focusing on one drive unit A among the plurality of drive units A shown in Fig. 3. Except for the battery 31, Fig. 4 shows a common configuration which each of the plurality of drive units A has. That is, the drive system 30 includes the inverter 32 for each drive unit A. The plurality of drive units A are connected to the single battery 31. The battery 31 and the inverters 32 are housed, for example, in the upper structure 14 shown in Fig. 1 of the excavator 100.

As shown in Fig. 4, the electric motor 40 is electrically connected to the battery 31 via the inverter 32. The electric motor 40 is a three-phase AC motor. The electric motor 40 receives power fed from the battery 31. The electric motor 40 includes a motor housing 41 and an output shaft 42 rotatable relative to the motor housing 41. The motor housing 41 is attached to any one of the second swing wall 17B, the second boom end 21B, the second arm end 23B, the housing front portion 14B, the housing main portion 14A, or the lower structure 13 of the excavator 100. The element to which the motor housing 41 is attached differs depending on which of the plurality of drive units A includes the motor housing 41. For example, when the drive unit A is the second drive unit A2, the motor housing 41 is attached to the second boom end 21B as shown in Fig. 2.

The output shaft 42 protrudes from the inside to the outside of the motor housing 41. The output shaft 42 is shaped like a circular column. The output shaft 42 is rotatable relative to the motor housing 41 about an axis J, which is a center axis of the output shaft 42. That is, the output shaft 42 outputs torque about the axis J. The output shaft 42 is rotatable in both forward and reverse directions about the axis J.

The axis J is any one of first to fourth axes J1 to J4, the travel axis J5, or the slewing axis J6. The axis J of the electric motor 40 included in the first drive unit A1 is the first axis J1. The axis J of the electric motor 40 included in the second drive unit A2 is the second axis J2. The axis J of the electric motor 40 included in the third drive unit A3 is the third axis J3. The axis J of the electric motor 40 included in the fourth drive unit A4 is the fourth axis J4. The axis J of the electric motor 40 included in the travel drive unit A5 is the travel axis J5. The axis J of the electric motor 40 included in the slewing drive unit A6 is the slewing axis J6.

### <Speed Reducer>

The speed reducer 50 includes a gear housing 51, a speed reduction mechanism 52, and an output member 53.

The gear housing 51 is a housing of the speed reducer 50. The gear housing 51 is fixed to the motor housing 41. Thus, the speed reducer 50 is coupled to the electric motor 40. The gear housing 51 accommodates the reduction mechanism 52 therein.

The speed reduction mechanism 52 receives the torque of the output shaft 42 of the motor 40. The speed reduction mechanism 52 is configured to amplify the torque from the first electric motor 40 at a predetermined ratio and output the amplified torque to the output member 53. The speed reduction mechanism 52 may be of, for example, an eccentric oscillation gear type or planetary gear type.

A lubricant 52a is provided inside the reduction mechanism 52. Specifically, the lubricant 52a is accommodated in the gear housing 51 and fills, for example, gaps between gears and the like in the speed reduction mechanism 52. The lubricant 52a is, for example, grease or oil. The lubricant 52a flows inside the gear housing 51 as the speed reduction mechanism 52 operates. The lubricant 52a reduces friction between components that slide against each other in the speed reduction mechanism 52. In addition, the lubricant 52a forms part of a heat conduction path between the gears and the like in the speed reduction mechanism 52. Note that in Figs. 4 to 6, the lubricant 52a is schematically indicated by a double-dot chain line.

The output member 53 is shaped like a circular column. A center axis of the output member 53 substantially coincides with the axis J. The output member 53 is rotatable relative to the gear housing 51. The output member 53 rotates about the axis J by rotation of the output shaft 42 of the electric motor 40. A driven object is attached to the output member 53.

The driven object is any one of the boom 21, the arm 23, the bucket 25, the first swing wall 17A, the inner race 18A of the slewing bearing 18, or the traveling roller 12A of the excavator 100. Which of the above-mentioned elements the driven object is depends on which of the plurality of drive units A is provided with the output member 53. For example, when the drive unit A is the second drive unit A2, the driven object is the arm 23, as shown in Fig. 2.

The output member 53 inputs torque about the axis J to the driven object. That is, the speed reducer 50 amplifies the torque of the electric motor 40 and outputs the amplified torque to the driven object. The driven object receives this torque and rotates about the axis J. Therefore, the electric motor 40 can be said to be a drive source for the rotating driven object.

### <Temperature Sensor, Impact Sensor, and Angle Sensor>

As shown in Fig. 3, the temperature sensor TS is attached to the gear housing 51. The temperature sensor TS is disposed at a portion of the gear housing 51 closer to the electric motor 40.

The temperature sensor TS detects the temperature of the speed reducer 50. More specifically, the temperature of the speed reducer 50 is the temperature of the gear housing 51 included in the speed reducer 50. The temperature of the gear housing 51 reflects the temperature of the lubricant 52a contained inside the gear housing 51. For this reason, it can be said that the temperature sensor TS detects information related to the temperature of the lubricant 52a by detecting the temperature of the gear housing 51. The temperature sensor TS repeatedly outputs the detected temperature to the control device 90 at a prescribed control cycle.

An impact sensor IS is attached to the gear housing 51. The impact sensor IS detects an impact. The impact sensor IS is an acceleration sensor that detects the acceleration of the speed reducer 50 or the driven object as an impact. In this embodiment, the impact sensor IS detects the acceleration of the speed reducer 50 as an impact. More specifically, the impact sensor IS detects acceleration generated at the speed reducer 50 when the impact is applied to the speed reducer 50. The impact sensor IS detects acceleration components in each of the X-direction, Y-direction, and Z-direction generated at the location where the impact sensor IS is attached. Note that the directions of acceleration detected by the impact sensor IS are not limited to the three directions described above. The impact sensor IS may be any triaxial acceleration sensor capable of detecting acceleration in three different directions.

The impact sensor IS is driven by an auxiliary battery 33. The auxiliary battery 33 supplies power to the impact sensor IS. That is, the drive system 30 includes the auxiliary battery 33 and drives the impact sensor IS by the auxiliary battery 33. The auxiliary battery 33 is provided separately from the battery 31. That is, the auxiliary battery 33 can supply power to the impact sensor IS connected thereto independently of the battery 31.

The drive system 30 includes the single auxiliary battery 33 for each impact sensor IS. In this embodiment, the auxiliary battery 33 is a coin cell battery. The auxiliary battery 33 is provided in the same case as the impact sensor IS. That is, it can be said that the auxiliary battery 33 is disposed at the same position as the impact sensor IS on the gear housing 51.

The impact sensor IS is configured to store the detected acceleration as time-series data. The impact sensor IS stores a history of acceleration detected during a period in which power is supplied from the auxiliary battery 33. Note that the impact sensor IS may be realized with a detection unit that detects acceleration and a storage unit that stores the history of the detected acceleration which are two separate structures. In this case, the impact sensor IS is formed by unitizing the separate detection unit and storage unit. Further, in this case, both the detection unit and the storage unit are driven by the auxiliary battery 33.

When the control device 90 is operating, the impact sensor IS repeatedly outputs the detected acceleration to the control device 90 at a prescribed control cycle. When the control device 90 is not operating, the impact sensor IS stores the history of the detected acceleration. Then, when the control device 90 starts operating, the impact sensor IS outputs the stored history of acceleration to the control device 90 as time-series data.

The angle sensor AS detects information regarding an angular position of the corresponding electric motor 40 as angle information. Specifically, the angular position of the electric motor 40 is the angular position of the output shaft 42 of the corresponding electric motor 40. The angle information indicates an absolute angle. For example, the angle information indicates the angular position of the electric motor 40 in a range of 0 degrees or more and less than 360 degrees, with a predetermined reference position being 0 degrees. Each angle sensor AS repeatedly outputs the information detected by the angle sensor AS to the control device 90.

### <Cooling Device>

The cooling device 60 cools the speed reducer 50. Although detailed illustration is omitted in Fig. 4, the cooling device 60 may be, for example, a water-cooled type including a flow path formed inside the gear housing 51, a coolant flowing through the flow path, and a pump that circulates the coolant in the flow path. Alternatively, the cooling device 60 may be an air-cooled type including a fan.

### <Brake Device>

The brake device 70 is interposed between the electric motor 40 and the speed reducer 50. The brake device 70 is fixed to the motor housing 41 and the gear housing 51.

The brake device 70 is capable of restricting rotation of a restriction target shaft 71. The restricted shaft 71 is one of the output shaft 42 of the electric motor 40 or the output member 53 of the speed reducer 50. In this embodiment, the restriction target shaft 71 is the output shaft 42.

The brake device 70 is switchable between a restriction state in which rotation of the restriction target shaft 71 is restricted and an allowable state in which rotation of the restriction target shaft 71 is allowed. Specifically, the brake device 70 restricts rotation of the output shaft 42 in the restriction state and allows rotation of the output shaft 42 in the allowable state. By switching between the restriction state and the allowable state, the brake device 70 switches the drive unit A between a state in which torque is not input from the electric motor 40 to the speed reducer 50 and a state in which the torque is input to the speed reducer 50.

In the restriction state, the brake device 70 contacts the restriction target shaft 71 to restrict rotation of the restriction target shaft 71. For example, the brake device 70 in the restriction state physically restricts the rotation of the restriction target shaft 71 by bringing a stopper (not shown) into contact with the restriction target shaft 71. In the allowable state, the brake device 70 allows rotation of the restriction target shaft 71. For example, the brake device 70 equipped with the stopper does not contact the stopper with the restriction target shaft 71 in the allowable state. In this manner, the brake device 70 equipped with the stopper switches between the restriction state and the allowable state by movement of the stopper.

### <Clutch Mechanism>

The clutch mechanism 80 is interposed between the electric motor 40 and the speed reducer 50. The clutch mechanism 80 is fixed to the motor housing 41 and the gear housing 51. The clutch mechanism 80 is capable of decoupling the output shaft 42 of the electric motor 40 from the speed reduction mechanism 52 of the speed reducer 50.

The clutch mechanism 80 is switchable between a disengaged state and an engaged state. The clutch mechanism 80 is, for example, a friction clutch having a pair of friction plates. In the disengaged state, the clutch mechanism 80 decouples the speed reducer 50 from the electric motor 40. Thus, the clutch mechanism 80 in the disengaged state stops the input of torque from the output shaft 42 to the speed reduction mechanism 52. The clutch mechanism 80 stops the input of torque by decoupling the output shaft 42 from the speed reduction mechanism 52. In this way, the clutch mechanism 80 prevents the input of torque to the speed reduction mechanism 52 while allowing rotation of the output shaft 42. In the engaged state, the clutch mechanism 80 allows the transmission of torque from the electric motor 40 to the speed reducer 50. In this way, the clutch mechanism 80 in the engaged state allows the input of torque from the output shaft 42 to the speed reduction mechanism 52.

### <Control Device>

As shown in Fig. 3, the control device 90 is a computer provided with processing circuit. The control device 90 is disposed, for example, inside the upper structure 14 of the excavator 100 shown in Fig. 1. The control device 90 is powered by the battery 31.

The control device 90 includes a memory 91 and a CPU 92. The memory 91 includes three types of storage media: RAM, ROM, and electrically rewritable nonvolatile memory. In this embodiment, these three types of storage media are collectively referred to as the memory 91. The memory 91 stores in advance various programs in which processes to be executed by the CPU 92 are described. The memory 91 stores in advance various data necessary for the CPU 92 to execute the programs.

The control device 90 includes an operation control unit 93, a warm-up unit 94, and a load estimation unit 95. Each of the operation control unit 93, the warm-up unit 94, and the load estimation unit 95 is a functional element that functions by the CPU 92 executing a program stored in the memory 91.

The control device 90 of the embodiment executes the programs stored in the memory 91 based on command signals input by an operator who operates the excavator 100. The command signal is supplied, for example, from an input terminal installed in the cabin. Note that the control device 90 may execute the above-described programs based on factors other than the command signals input from the operator. For example, the control device 90 may execute the above-described programs simultaneously with activation of the excavator 100.

As shown in Fig. 4, information detected by each of the temperature sensor TS, the impact sensor IS, and the angle sensor AS is input to the control device 90. Further, the control device 90 outputs control signals to the inverter 32, the cooling device 60, the brake device 70, and the clutch mechanism 80.

As shown in Fig. 3, the control device 90 outputs control signals to each of the plurality of drive units A. More specifically, the control device 90 outputs respective control signals to the first drive unit A1, the second drive unit A2, the third drive unit A3, the fourth drive unit A4, the travel drive unit A5, and the slewing drive unit A6. The control device 90 executes processes by using the operation control unit 93, the warm-up unit 94, and the load estimation unit 95 for each of the plurality of drive units A.

### <Operation Control Unit>

The operation control unit 93 performs an operation control process of outputting control signals to the inverter 32, the brake device 70, and the clutch mechanism 80 based on input from the operator.

The inverter 32 supplies power from the battery 31 to the electric motor 40 based on the control signal input from the operation control unit 93. That is, the control device 90 controls the power supply to the electric motor 40. The control device 90 controls the operation of the excavator 100 by controlling the power supply to the electric motor 40 in each of the plurality of drive units A. For example, the control device 90 controls travel of the excavator 100 by controlling the power supply to the electric motor 40 included in the travel drive unit A5.

The brake device 70 switches between the restriction state and the allowable state based on the control signal input from the operation control unit 93. For example, consider a case where the control device 90 switches the brake device 70 in each of the first to third drive units A1 to A3 from the restriction state to the allowable state in accordance with input from the operator. In this case, the excavator 100 can operate the boom 21, the arm 23, and the bucket 25 by rotating the electric motors 40 included in each of the first to third drive units A1 to A3.

The clutch mechanism 80 switches between the disengaged state and the engaged state based on the control signal input from the operation control unit 93. For example, consider a case where the control device 90 switches the clutch mechanism 80 in each of the first to third drive units A1 to A3 from the disengaged state to the engaged state based on input from the operator. In this case, the excavator 100 can operate the boom 21, the arm 23, and the bucket 25 by inputting the rotation of the electric motor 40 included in each of the first to third drive units A1 to A3 to the speed reducer 50 included therein.

### <Warm-up Unit>

The warm-up unit 94 executes, based on the temperature input from each of the plurality of temperature sensors TS, a warm-up process for warming up each of the speed reducers 50 included in the same drive unit A as the temperature sensor TS. That is, the control device 90 executes the warm-up process.

The warm-up process is executed when the temperature detected by the temperature sensor TS is equal to or lower than a prescribed temperature. Temperatures detected in each of the plurality of speed reducers 50 are input to the control device 90 from the corresponding temperature sensors TS. The warm-up unit 94 refers to each of the plurality of input temperatures and identifies the temperature sensor TS that has detected a temperature equal to or lower than the prescribed temperature. Further, the warm-up unit 94 identifies the drive unit A that has the identified temperature sensor TS. The control device 90 causes the warm-up unit 94 to execute the warm-up process for the identified drive unit A.

The prescribed temperature is set in advance and stored in the memory 91. The prescribed temperature is set based on, for example, the physical properties of the lubricant 52a in the speed reducer 50, and the type and size of the speed reduction mechanism 52. An example of the prescribed temperature is a temperature at which a resistance value against the speed reduction mechanism 52 does not hinder the prompt operation of the speed reduction mechanism 52. Note that the prescribed temperature is set for each speed reducer 50. The prescribed temperature may differ for each speed reducer 50 or may be the same for all the speed reducers 50.

The warm-up process is a process of supplying power to the electric motor 40 while maintaining a rotation angle of the output member 53 of the speed reducer 50 within a predetermined range. When the rotation angle of the output member 53 is within the predetermined range, a rotation range of the driven object attached to the output member 53 is also within a range corresponding to the above-mentioned predetermined range. Therefore, the warm-up process can also be described as a process of supplying power to the electric motor 40, which is the drive source of the driven object, while limiting the rotation range of the driven object.

In this embodiment, during the execution of the warm-up process, the control device 90 supplies power to the electric motor 40 such that the output member 53 of the speed reducer 50, which is the target of the warm-up process, does not rotate. For example, the control device 90 supplies power to the electric motor 40 such that the output shaft 42 does not rotate by adjusting the phase of three-phase AC power supplied to the electric motor 40 through the inverter 32. Specifically, in order for the output shaft 42 of the electric motor 40 to rotate, the frequency of the AC power output by the inverter 32 and the rotation angle of the output shaft 42 need to be synchronized. Therefore, by outputting AC power from the inverter 32 that is not synchronized with the rotation angle of the output shaft 42, the output shaft 42 can be prevented from rotating.

The above-mentioned predetermined range may be set based on the type and size of the driven object to which each speed reducer 50 outputs torque. The predetermined range may be set according to an allowable operating range of the driven object coupled to the speed reducer 50 that is the target of the warm-up process during the execution of the warm-up process. The range should preferably be set small, and it is most preferable to set it such that the output member 53 of the speed reducer 50 does not rotate.

The warm-up process is a process of causing the electric motor 40 to generate heat by supplying power to the electric motor 40. A part of the power supplied to the electric motor 40 is converted into heat, for example, by a coil provided in the electric motor 40. In this way, the electric motor 40 generates heat by the supplied power. The warm-up unit 94 executes the warm-up process to cause the electric motor 40 to generate heat while the rotation of the output shaft 42 is restricted. That is, the warm-up unit 94 generates heat in the electric motor 40 while restricting the rotation of the driven object that is driven by the electric motor 40. The heat generated by the electric motor 40 is transmitted to the speed reducer 50 and leads to a temperature rise of the speed reducer 50.

The warm-up process is executed until the temperature detected by the temperature sensor TS exceeds the prescribed temperature. During the execution of the warm-up process, the warm-up unit 94 stops the warm-up process for the drive unit A at the time when the temperature detected by the temperature sensor TS of the drive unit A, which is the target of the warm-up process, becomes higher than the prescribed temperature. Therefore, the warm-up process can be described as a process of raising the temperature of the speed reducer 50, which the temperature sensor TS has detected to be below the prescribed temperature, to a temperature above the prescribed temperature using the heat generated by the electric motor 40.

Note that when temperatures equal to or lower than the prescribed temperature are input to the control device 90 from the two or more temperature sensors TS, the warm-up unit 94 identifies all the drive units A that have those temperature sensors TS. The warm-up unit 94 executes the warm-up process for all the identified drive units A. That is, the control device 90 executes the warm-up process for each of the electric motors 40 independently. Among the specified drive units A, the warm-up unit 94 stops heating the electric motor 40 via the warm-up process for those drive units A whose temperatures detected by the temperature sensor TS exceed the prescribed temperature. The warm-up unit 94 executes the warm-up process for each drive unit A until the temperature detected in the speed reducer 50 in all the drive units A included in the drive system 30 becomes higher than the prescribed temperature.

During the execution of the warm-up process, if the temperature detected by the temperature sensor TS becomes equal to or higher than a predetermined upper limit, the control device 90 causes the cooling device 60 to cool the speed reducer 50. The upper limit may be specified based on the physical properties of the lubricant 52a, or may be determined based on the upper limit of the temperature allowable in the electric motor 40 and the speed reducer 50. Note that the upper limit is a temperature higher than the above-mentioned prescribed temperature.

### <Operation in Warm-up Process>

In the excavator 100, consider a case where the temperature sensor TS detects a temperature equal to or lower than the prescribed temperature in the speed reducer 50. In this case, the drive system 30 of the excavator 100 executes the warm-up process via the control device 90. The control device 90 supplies power to the electric motor 40 to cause the electric motor 40 to generate heat while controlling the rotation of the output member 53 of the speed reducer 50.

The heat generated in the electric motor 40 is transmitted to the speed reducer 50 coupled to the electric motor 40. That is, the speed reducer 50 is heated by the heat generated in the electric motor 40 by the warm-up process. More specifically, the heat generated in the electric motor 40 by the warm-up process is transmitted to the speed reducer 50 through the motor housing 41 and the output shaft 42. The heat generated in the electric motor 40 is transmitted to the gear housing 51 and the speed reduction mechanism 52, and also heats the lubricant 52a. That is, the warm-up unit 94 heats the lubricant 52a in the speed reducer 50 by executing the warm-up process.

The control device 90 executes the warm-up process until the temperature detected in the speed reducer 50 becomes higher than the prescribed temperature.

### <Load Estimation Unit>

The load estimation unit 95 executes, based on the acceleration input from each of the plurality of impact sensors IS, a load estimation process for the speed reducer 50 or the driven object included in the same drive unit A as the impact sensor IS. That is, the control device 90 executes the load estimation process.

Accelerations detected at the speed reducers 50 are input to the control device 90 from the respective impact sensors IS included in the drive units A. The load estimation unit 95 stores the input accelerations as time-series data for each drive unit A. Further, at the start of the operation of the control device 90, time-series data of accelerations detected during a period in which the control device 90 was not operating is input to the control device 90 from the plurality of impact sensors IS. Thus, the control device 90 executes the load estimation process based on the accelerations at the speed reducers 50 detected by the impact sensors IS, including the period in which the control device 90 was not operating.

The load estimation process calculates an estimated value of a load on the speed reducer 50 or the driven object. In this embodiment, the load estimation process calculates an estimated value of a load on the speed reducer 50. The control device 90 executes the load estimation process via the load estimation unit 95 for each of the plurality of speed reducers 50. In this embodiment, the estimated value of the load is an estimated magnitude of a load torque acting on the speed reducer 50.

When power is not supplied to the electric motor 40, the control device 90 calculates the estimated value based on the impact detected by the impact sensor IS in the load estimation process. The control device 90 calculates the estimated value based on the impact detected by the impact sensor IS in the load estimation process performed by the load estimation unit 95.

The load estimation unit 95 acquires the acceleration and the time-series data of the acceleration input to the control device 90 from each impact sensor IS. That is, the load estimation unit 95 acquires the time-series data of the acceleration covering both periods during operation and non-operation of the control device 90. The load estimation unit 95 calculates the estimated value of the load from the time-series data of the acceleration at each speed reducer 50. The load estimation unit 95 calculates the estimated value of the load from the acceleration at each period based on, for example, a table prepared in advance in the memory 91. The table may be any table that shows a relationship among the position where the impact sensor IS is attached, the values of acceleration in the X-direction, the Y-direction, and the Z-direction, and the load torque acting on the speed reducer 50. The table is created, for example, by simulation.

When power is supplied to the electric motor 40, the control device 90 calculates the estimated value based on a value of electric current supplied to the electric motor 40 in the load estimation process. In the control device 90, the load estimation unit 95 acquires, from the operation control unit 93, the value of the electric current supplied from the battery 31 to the electric motor 40 of each drive unit A. Further, the load estimation unit 95 acquires angle information of the output shaft 42 from the angle sensor AS attached to the electric motor 40. After converting the angle information into a rotational speed of the output shaft 42, the load estimation unit 95 calculates the estimated value of the load torque of the speed reducer 50 from the rotational speed and the current value.

When power is supplied to the electric motor 40, the control device 90 calculates the estimated value based on the value of the current supplied to the electric motor 40 and the impact detected by the impact sensor IS in the load estimation process. Specifically, the control device 90 estimates the load torque from the rotational speed of the output shaft 42 and the current value, and when an acceleration larger than a prescribed acceleration is detected by the impact sensor IS, calculates the estimated value based on that acceleration. The prescribed acceleration is predetermined. The prescribed acceleration is determined for each drive unit A. The prescribed acceleration is, for example, set to a value larger than an expected acceleration in the drive unit A for which the prescribed acceleration is set.

### <Operation in Load Estimation Process>

In the drive system 30, the control device 90 calculates an estimated load value of the speed reducer 50 through a load estimation process during both a period in which power is supplied to the electric motor 40 and a period in which power is not supplied to the electric motor 40. For example, when the excavator 100 is transported from a storage location to a work site by a transport vehicle, an impact resulting from the vibration of the transport vehicle may act on the speed reducer 50 or the driven object. In such a case, the control device 90 calculates the estimated value of the load torque acting on the speed reducer 50 or the driven object based on the impact input from the impact sensor IS.

### <Advantageous Effects of First Embodiment>

Advantageous effects of the embodiment will now be described.

(1-1) Through the warm-up process performed by the control device 90, the drive system 30 is capable of generating heat in the electric motor 40 while maintaining the rotation of the driven object within a predetermined range. The heat of the electric motor 40 is transmitted to the speed reducer 50 coupled to the electric motor 40. The drive system 30 of the excavator 100 can supply power to the electric motor 40 until the speed reducer 50 reaches the prescribed temperature, while maintaining the rotation of the driven object within the predetermined range. This allows the drive system 30 to raise the temperature of the speed reducer 50 to the predetermined prescribed temperature or higher. As a result, the drive system 30 can reduce the load applied to the speed reducer 50.

(1-2) The drive system 30 can execute the warm-up process by the control device 90 for each speed reducer 50. That is, if the temperatures detected by the temperature sensors TS differ among the speed reducers 50, the drive system 30 can, for example, execute the warm-up process only for some of the speed reducers 50 that require the warm-up process. Therefore, compared to a case where the warm-up process is executed uniformly for all the speed reducers 50, the power required for the warm-up process can be reduced.

(1-3) When power is not supplied to the electric motor 40, the drive system 30 calculates the estimated value of load on the speed reducer 50 or the driven object based on the impact detected by the impact sensor IS through the load estimation process of the control device 90. In other words, by providing the impact sensor IS and executing the load estimation process by the control device 90, the drive system 30 can calculate the estimated value of the load generated in the speed reducer 50 or the driven object when the electric motor 40 is not rotating. As described above, the drive system 30 can estimate the load on the speed reducer 50 or the driven object even when the electric motor 40 is not rotating.

(1-4) When power is not supplied to the electric motor 40, the drive system 30 calculates the estimated load value of the speed reducer 50 based on the impact detected by the impact sensor IS. Whereas when power is supplied to the electric motor 40, the drive system 30 calculates the estimated load value of the speed reducer 50 based on the value of the current supplied to the electric motor 40. Thus, regardless of whether power is supplied to the electric motor 40 or not, the drive system 30 can estimate the load on the speed reducer 50 or the driven object through the load estimation process of the control device 90.

(1-5) The impact sensor IS operates using the auxiliary battery 33 as its power source. By operating the impact sensor IS using the auxiliary battery 33, which is separate from the battery 31, the drive system 30 can estimate the load on the speed reducer 50 or the driven object even when the control device 90 does not control the power output from the battery 31.

(1-6) The drive system 30 includes the impact sensor IS, which is an acceleration sensor, and the control device 90 calculates the estimated value of the load on the speed reducer 50 or the driven object based on the acceleration detected by the impact sensor IS. The drive system 30 can detect the impact on the speed reducer 50 or the driven object with higher accuracy than, for example, a case where a strain sensor is provided as the impact sensor IS.

(1-7) When power is supplied to the electric motor 40, the control device 90 calculates the estimated value in the load estimation process based on the current value supplied to the electric motor 40 and the impact detected by the impact sensor IS. For example, during the operation of the electric motor 40, if a strong external impact acts on the electric motor 40 such that the output shaft 42 rotates in a direction opposite to the direction prescribed by the current value, it may be difficult to calculate the estimated load value based solely on the current value. Even in such a case, the control device 90 can calculate the estimated value because it executes the load estimation process based on the impact detected by the impact sensor IS.

### <Second Embodiment>

Another embodiment of the drive system for the work machine will be described. The drive system for the work machine of the second embodiment is the drive system 30 for the excavator 100, similar to the first embodiment. The primary difference from the first embodiment is that the drive unit A includes a thermal transistor 110. Therefore, detailed descriptions of configurations identical to those of the first embodiment will be omitted.

### <Thermal Transistor>

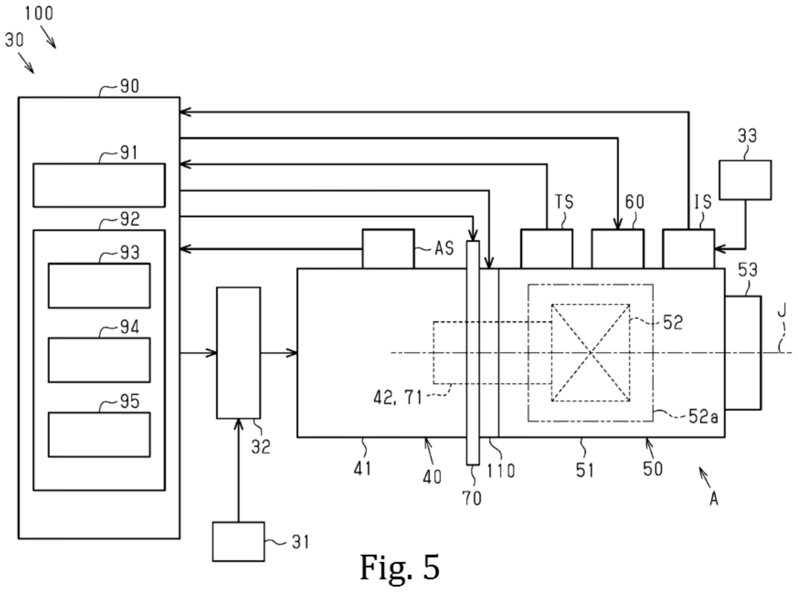

As shown in Fig. 5, the drive system 30 includes the thermal transistor 110. A thermal conductivity of the thermal transistor 110 changes upon application of an electric current. The thermal transistor 110 may be a so-called all-solid-state transistor, or may be configured such that a thermal transistor fluid composed of an electrolytic solution is sealed within a container. In the drive system 30, each of the plurality of drive units A is provided with the thermal transistor 110. In other words, in the drive system 30, the thermal transistor 110 is provided for each drive unit A. Note that in Fig. 5, the illustration of the clutch mechanism 80 is omitted.

The thermal transistor 110 is interposed between the electric motor 40 and the speed reducer 50. The thermal transistor 110 is fixed to the motor housing 41 and the gear housing 51. The motor housing 41 and the gear housing 51 are connected to each other via the thermal transistor 110. Thus, heat generated by the electric motor 40 is transmitted to the speed reducer 50 via the output shaft 42 and the thermal transistor 110.

The output shaft 42 of the electric motor 40 passes through the thermal transistor 110. That is, the output shaft 42 of the electric motor 40 is connected to the speed reduction mechanism 52. The thermal transistor 110 is switchable between a high thermal conductivity state and a low thermal conductivity state. In the high thermal conductivity state, the thermal conductivity of the thermal transistor 110 is higher than the thermal conductivity of the output shaft 42 of the electric motor 40. The thermal conductivity referred to herein is expressed, for example, in Watts per meter-Kelvin (W/m·K) in the International System of Units (SI).

When the thermal transistor 110 is in the high thermal conductivity state, the heat generated by the electric motor 40 is transmitted to the speed reducer 50 mainly via the thermal transistor 110. In the low thermal conductivity state, the thermal conductivity of the thermal transistor 110 is lower than the thermal conductivity of the thermal transistor 110 in the high thermal conductivity state. When the thermal transistor 110 is in the low thermal conductivity state, the heat generated by the electric motor 40 is transmitted to the speed reducer 50 mainly via the output shaft 42.

The thermal transistor 110 is connected to the battery 31 and the control device 90. The control device 90 outputs a control signal to the thermal transistor 110 via the warm-up unit 94. The thermal transistor 110 switches between the high thermal conductivity state and the low thermal conductivity state based on the control signal input from the warm-up unit 94. Specifically, the control device 90 switches the thermal transistor 110 to the high thermal conductivity state while the warm-up process is being executed, and otherwise switches the thermal transistor 110 to the low thermal conductivity state.

The warm-up unit 94 switches the state of the thermal transistor 110 by controlling power supply from the battery 31 to the thermal transistor 110. More specifically, the warm-up unit 94 makes the thermal transistor 110 in the high thermal conductivity state by connecting the thermal transistor 110 to the battery 31. Furthermore, the warm-up unit 94 places the thermal transistor 110 in the low thermal conductivity state by disconnecting the thermal transistor 110 from the battery 31.

### <Operation in Second Embodiment>

The operation of the second embodiment will be described. The control device 90 switches the thermal transistor 110 to the high thermal conductivity state during execution of the warm-up process. When the warm-up process is not being executed, the control device 90 maintains the thermal transistor 110 in the low thermal conductivity state, and then switches the thermal transistor 110 to the high thermal conductivity state upon execution of the warm-up process. When a temperature detected by the temperature sensor TS is equal to or lower than the prescribed temperature, the control device 90 executes the warm-up process and switches the thermal transistor 110 to the high thermal conductivity state. Accordingly, during the execution of the warm-up process, the heat generated by the electric motor 40 heats the speed reducer 50 via the thermal transistor 110 in the high thermal conductivity state and the output shaft 42.

### <Advantageous Effects of Second Embodiment>

Advantageous effects of the second embodiment will now be described.

(2-1) According to the second embodiment, since the drive system 30 includes the thermal transistor 110, the drive system 30 is capable of controlling heat conduction from the electric motor 40 to the speed reducer 50. When the temperature of the speed reducer 50 detected by the temperature sensor TS is equal to or lower than a prescribed temperature, the control device 90 is configured to execute the warm-up process while the thermal transistor 110 is in the high thermal conductivity state. Thus, the drive system 30 of the excavator 100 can increase the rate of temperature rise of the speed reducer 50 during the warm-up process as compared to a configuration in which the thermal transistor 110 is not provided. Whereas when the warm-up process is not performed, the control device 90 switches the thermal transistor 110 to the low thermal conductivity state. This configuration prevents excessive heat from the electric motor 40 from being transmitted to the speed reducer 50.

### <Third Embodiment>

Another embodiment of the drive system for the work machine will be described. The drive system for the work machine of the third embodiment is the drive system 30 for the excavator 100, similar to the first and second embodiments. A primary difference between the present embodiment and the first and second embodiments is that the drive unit A includes a heat transfer shaft 120. Therefore, detailed descriptions of configurations identical to those of the first embodiment will be omitted.

### <Electric Motor>

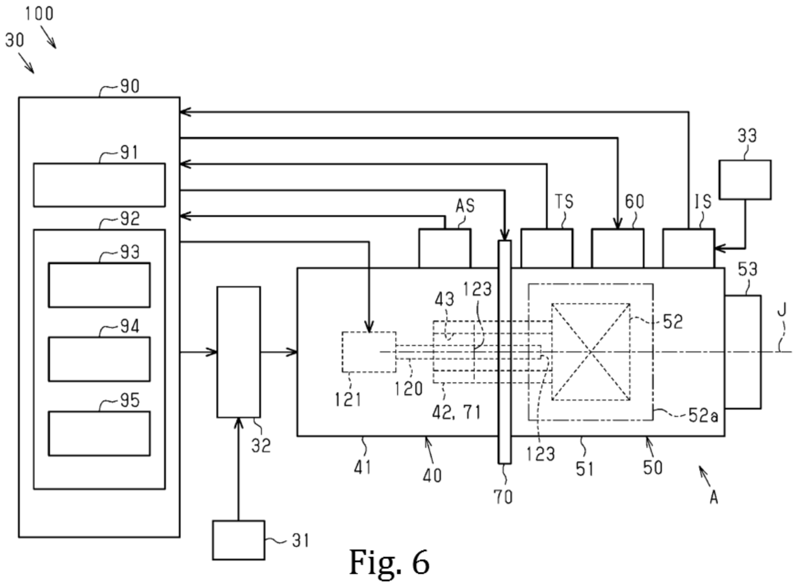

As shown in Fig. 6, the electric motor 40 includes a heat transfer shaft 120 and a shaft drive portion 121. The thermal conductivity of the heat transfer shaft 120 is higher than the thermal conductivity of the output shaft 42. The thermal conductivity referred to herein is expressed, for example, in Watts per meter-Kelvin (W/m·K) in the International System of Units (SI). The output shaft 42 of the electric motor 40 has a through-hole 43 extending in an axial direction of the output shaft 42. One end of the through-hole 43 opens toward the interior of the motor housing 41, and the other end thereof opens toward the interior of the gear housing 51. Accordingly, the interior of the motor housing 41 and the interior of the gear housing 51 are in communication with each other via the through-hole 43 of the output shaft 42. Note that in Fig. 6, the illustration of the clutch mechanism 80 is omitted.

### <Heat Transfer Shaft>

In the drive system 30, each of the plurality of drive units A includes the heat transfer shaft 120 and the shaft drive portion 121 corresponding to the heat transfer shaft 120. In other words, the drive system 30 includes a set of the heat transfer shaft 120 and the shaft drive portion 121 for each drive unit A.

The heat transfer shaft 120 has a cylindrical body. A proximal end of the heat transfer shaft 120 is coupled to the shaft drive portion 121. An end of the heat transfer shaft 120 opposite to the proximal end is a distal end 123. The shaft drive portion 121 is housed in the motor housing 41. The shaft drive portion 121 is fixed to the motor housing 41.

The distal end 123 of the heat transfer shaft 120 is configured to be reciprocally movable along the axis J. Specifically, the heat transfer shaft 120 is reciprocally movable relative to the shaft drive portion 121 along the axis J. The reciprocal movement of the heat transfer shaft 120 along the axis J is driven by the shaft drive portion 121. An example of the shaft drive portion 121 is a solenoid. In this case, the heat transfer shaft 120 moves along the shaft drive portion 121 by an electric current flowing through the shaft drive portion 121 which is the solenoid. Whereas when the electric current to the shaft drive portion 121 is interrupted, the heat transfer shaft 120 moves, by an elastic force of a spring or the like, in a direction opposite to the direction in which the heat transfer shaft 120 moves when the electric current flows.

The state of the heat transfer shaft 120 is switchable between an inserted state and a non-inserted state. The state of the heat transfer shaft 120 is switched between the inserted state and the non-inserted state by reciprocating the distal end 123 along the axis J.

In the inserted state, the distal end 123 of the heat transfer shaft 120 is situated inside the gear housing 51. That is, the heat transfer shaft 120 in the inserted state reaches the interior of the gear housing 51. The heat transfer shaft 120 in the inserted state passes through the output shaft 42. Note that Fig. 6 illustrates the heat transfer shaft 120 in the inserted state. The heat transfer shaft 120 passes through the output shaft 42, and its distal end 123 protrudes into a space in the gear housing 51 where lubricant 52a is stored.

When the heat transfer shaft 120 is in the inserted state, heat generated by the electric motor 40 is transmitted to the speed reducer 50 via the motor housing 41, the output shaft 42, and the heat transfer shaft 120. The heat transmitted to the speed reducer 50 via the heat transfer shaft 120 heats the lubricant 52a without any other heat transmitting members interposed therebetween.

In the non-inserted state, the distal end 123 of the heat transfer shaft 120 is situated outside the gear housing 51. When the heat transfer shaft 120 is in the non-inserted state, the heat generated by the electric motor 40 is transmitted to the speed reducer 50 via the motor housing 41 and the output shaft 42. In Fig. 6, the position of the distal end 123 of the heat transfer shaft 120 in the non-inserted state is indicated by the double-dot chain line on the heat transfer shaft 120.

The heat transfer shaft 120 is connected to the control device 90 via the shaft drive portion 121. The control device 90 outputs a control signal to the shaft drive portion 121 via the warm-up unit 94. The shaft drive portion 121 switches the state of the heat transfer shaft 120 between the inserted state and the non-inserted state based on the control signal input from the warm-up unit 94. That is, the heat transfer shaft 120 reciprocates inside the motor housing 41 along the axis J in response to the control signal from the warm-up unit 94. For example, the control device 90 moves the heat transfer shaft 120 along the axis J by supplying power to the shaft drive portion 121. Specifically, the control device 90 switches the heat transfer shaft 120 to the inserted state through control of the shaft drive unit 121 during execution of a warm-up process, while switching the heat transfer shaft 120 to the non-inserted state through control of the shaft drive unit 121 otherwise.

### <Operation of Third Embodiment>

The operation of the second embodiment will be described. The control device 90 switches the heat transfer shaft 120 to the inserted state during execution of the warm-up process. More specifically, when the warm-up process is not being executed, the control device 90 maintains the heat transfer shaft 120 in the non-inserted state, and switches the heat transfer shaft 120 to the inserted state upon execution of the warm-up process. When a temperature detected by the temperature sensor TS is equal to or lower than the prescribed temperature, the control device 90 executes the warm-up process and switches the heat transfer shaft 120 to the inserted state. Thus, during the execution of the warm-up process, heat generated by the electric motor 40 is directly transmitted to the interior of the gear housing 51 by the distal end 123 of the heat transfer shaft 120. In addition to the motor housing 41 and the output shaft 42, the heat generated by the electric motor 40 is transmitted to the speed reducer 50 via the heat transfer shaft 120, which has higher thermal conductivity than the output shaft 42.

### <Advantageous Effects of Third Embodiment>

Advantageous effects of the embodiment will now be described.

(3-1) In the drive system 30, the heat generated by the electric motor 40 is transmitted to the speed reducer 50 via the heat transfer shaft 120 in addition to the output shaft 42 of the electric motor 40. Since the heat transfer shaft 120 is made of a material having higher thermal conductivity than a material of the output shaft 42 of the electric motor 40, a greater amount of heat transfer is possible than through the output shaft 42. That is, the drive system 30 can more efficiently transmit the heat of the electric motor 40 to the speed reducer 50 as compared to a configuration in which the heat transfer shaft 120 is not provided. As a result, the drive system 30 can more efficiently reduce a load on the speed reducer 50.

(3-2) The drive system 30 is capable of directly heating the interior of the gear housing 51 with the distal end 123 of the heat transfer shaft 120 during the execution of the warm-up process.

### <Modification Examples>

The above embodiment can be modified as described below. The above embodiments and the following modifications can be combined with each other to such an extent that they are technically consistent with each other.
- The control device 90 does not necessarily have to execute the warm-up process for each of the electric motors 40 independently. For example, the control device 90 may uniformly execute the warm-up process for all of the plurality of electric motors 40. In this case, it is preferable that the control device 90 uses the cooling device 60 to cool any speed reducer 50 that has been excessively heated by the warm-up process.
- The drive system 30 may include the temperature sensor TS in at least one speed reducer 50 among the plurality of speed reducers 50. For example, the drive system 30 may include the temperature sensor TS in the speed reducer 50 of a drive unit A that is frequently used among the plurality of drive units A.
- The drive system 30 may include both the thermal transistor 110 and the heat transfer shaft 120. In this case, during the execution of the warm-up process, the control device 90 switches the thermal transistor 110 to the high thermal conductivity state and switches the heat transfer shaft 120 to the inserted state. Accordingly, heat generated in the electric motor 40 is transmitted to the speed reducer 50 via the motor housing 41, the output shaft 42, the thermal transistor 110, and the heat transfer shaft 120.
- In the second embodiment, the control device 90 may switch the thermal transistor 110 from the low thermal conductivity state to the high thermal conductivity state even when the warm-up process is not being executed. For example, the control device 90 may execute the above-described switching depending on a magnitude of torque output by the electric motor 40.

The control device 90 can control the thermal capacity of the entire unit including the electric motor 40 and the speed reducer 50 by controlling the state of the thermal transistor 110. Specifically, the control device 90 can increase the thermal capacity of the entire unit by switching the thermal transistor 110 from the low thermal conductivity state to the high thermal conductivity state. In the excavator 100, for example, during excavation work, the torque output by the electric motor 40 may be increased in a short period of time. Although the electric motor 40 may rapidly generate heat in such a case, the drive system 30 can suppress heat from remaining in the electric motor 40 by efficiently conducting heat from the electric motor 40 to the speed reducer 50.
- The cooling device 60 may be configured to cool the speed reducer 50 and the electric motor 40.

- The control device 90 may switch the brake device 70 to the restriction state during the execution of the warm-up process. In this case, if the brake device 70 of the drive unit A is in the allowable state when executing the warm-up process for a drive unit A, the control device 90 executes the warm-up process via the warm-up unit 94 after switching the brake device 70 to the restriction state via the operation control unit 93. The control device 90 switches the brake device 70 to the restriction state so as to restrict rotation of the restriction target shaft 71 during the execution of the warm-up process. That is, the control device 90 executes the warm-up process in a state where the rotation of the output shaft 42 of the electric motor 40 is restricted. In the drive system 30, heat transmitted to the speed reducer 50 is generated by the electric motor 40 whose rotation is restricted by the brake device 70. The electric motor 40 can more efficiently convert supplied power into heat as compared to a case where its rotation is allowed. As a result, the drive system 30 can efficiently warm up the speed reducer 50 by executing the warm-up process of the control device 90 while restricting the rotation of the electric motor 40 with the brake device 70.

Alternatively, the control device 90 does not have to switch the brake device 70 to the restriction state during the execution of the warm-up process. For example, during the execution of the warm-up process, the brake device 70 may be switched by an operator of the excavator 100.
- The restriction target shaft 71 may be the output member 53.
   - The position of the brake device 70 in the drive unit A is not limited to the position described in the embodiments. For example, the brake device 70 may be interposed between the motor housing 41 and an object to which the motor housing 41 is attached. In other words, the brake device 70 can be placed at any position provided that it is capable of restricting the rotation of the restriction target shaft 71, which is one of the output shaft 42 of the electric motor 40 or the output member 53 of the speed reducer 50.
- The control device 90 may switch the clutch mechanism 80 to the disengaged state during the execution of the warm-up process. When the clutch mechanism 80 of the drive unit A is in the engaged state upon execution of the warm-up process for that drive unit A, the control device 90 executes the warm-up process via the warm-up unit 94 after switching the clutch mechanism 80 to the disengaged state via the operation control unit 93. As described above, when executing the warm-up process for the drive unit A, the control device 90 switches the states of the brake device 70 and the clutch mechanism 80 such that a driven object is not rotated by the rotation of the output shaft 42 of the electric motor 40 in the drive unit A. Alternatively, the control device 90 does not have to switch the clutch mechanism 80 to the disengaged state during the execution of the warm-up process. For example, during the execution of the warm-up process, the clutch mechanism 80 may be switched by an operator of the excavator 100.
- During the execution of the warm-up process, the control device 90 may cause the output shaft 42 of the electric motor 40 to rotate within a predetermined range by means of the warm-up unit 94. In other words, the control device 90 may operate the electric motor 40 and the speed reducer 50 in the drive unit A during the execution of the warm-up process for the drive unit A. The predetermined range in which the output shaft 42 of the electric motor 40 rotates is defined such that the rotation angle of the output member 53 of the speed reducer 50 falls within a predetermined range. By operating the speed reducer 50 during the execution of the warm-up process by the control device 90, the drive system 30 induces flow of the lubricant 52a by the speed reduction mechanism 52. The flow of the lubricant 52a during the execution of the warm-up process stirs the lubricant 52a and heat within the lubricant 52a is distributed through stirring. That is, by operating the speed reducer 50 during the execution of the warm-up process by the control device 90, the drive system 30 can efficiently heat the lubricant 52a compared to, for example, a case where the lubricant 52a remains stationary. As a result, the drive system 30 can raise the temperature of the lubricant 52a in the speed reducer 50 to the prescribed temperature at an earlier stage.
- The control device 90 may be configured such that each of the operation control unit 93, the warm-up unit 94, and the load estimation unit 95 does not necessarily execute processing based on the command signal input from the operator. For example, the control device 90 may perform control on the operation control unit 93, the warm-up unit 94, and the load estimation unit 95 according to a predetermined schedule.

An example in which the control device 90 controls the operation of the warm-up unit 94 according to the predetermined schedule will be described. The schedule is set, for example, based on a work schedule that is created for tasks to be performed by the excavator 100 in chronological order. Consider a work schedule in which the excavator 100 moves from the storage location to the work site and performs an excavation task. In this case, the excavator 100 moves from the storage location to the work site by the traveling unit 12 and then operates the work attachment 20 to perform the excavation task.

According to the above-described work schedule, the excavator 100 first drives the travel drive unit A5 after activated. The control device 90 performs the warm-up process for the speed reducer 50 provided in each of the travel drive unit A5 and the swing drive unit A6. After the temperature of the speed reducer 50 in each of the travel drive unit A5 and the swing drive unit A6 exceeds the prescribed temperature, the excavator 100 travels toward the work site. After the excavator 100 arrived at the work site, the control device 90 performs the warm-up process for the speed reducer 50 provided in each of first to fourth drive units A1 to A4. Alternatively, the control device 90 may perform the warm-up process for the speed reducer 50 provided in each of the first to fourth drive units A1 to A4 while the excavator 100 is traveling toward the work site. This allows the excavator 100 to perform the excavation task at the work site in a state where the temperature of the speed reducer 50 in each drive unit A has become higher than the prescribed temperature. As described above, in the drive system 30 of the excavator 100, the control device 90 can warm up each of the plurality of speed reducers 50 independently according to a preset schedule. Consequently, the drive system 30 of the excavator 100 can efficiently warm up the plurality of speed reducers 50.
- The impact sensor IS is not limited to an acceleration sensor. For example, the impact sensor IS may be a strain sensor that detects strain in the speed reducer 50 as an impact.
   - The configuration of the auxiliary battery 33 is not limited to that of the embodiments. The auxiliary battery 33 may be any battery provided separately from the battery 31. For example, the drive system 30 may include the single auxiliary battery 33 and may supply electric power from the single auxiliary battery 33 to the plurality of impact sensors IS.
- The drive system 30 does not necessarily include the auxiliary battery 33. In this case, electric power is supplied to the impact sensor IS from the battery 31.
   - In the load estimation process, the control device 90 does not necessarily calculate the estimated value based on the electric current supplied to the electric motor 40. In this case, the control device 90 calculates the estimated value based on the impact detected by the impact sensor IS, regardless of whether electric power is supplied to the electric motor 40.
- The work machine is not limited to the excavator 100. The work machine may be a construction machine other than the excavator 100. Furthermore, the work machine is not limited to construction machines. Examples of work machines other than construction machines include machines utilized in forestry, quarrying, industrial waste disposal, agriculture, and the like.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.
- According to the foregoing embodiments, a plurality of functions are distributively provided. Some or all of the functions may be integrated. Any one of the functions may be partly or entirely segmented into a plurality of functions, which are distributively provided. Irrespective of whether the functions are integrated or distributed, they are acceptable as long as they are configured to attain the object of the invention.
- The control device 90 may calculate the estimated value without depending on the impact detected by the impact sensor IS when electric power is supplied to the electric motor 40. In other words, the control device 90 may calculate the estimated value based on the impact detected by the impact sensor IS only when electric power is not supplied to the electric motor 40.
- The impact sensor IS may detect acceleration of the driven object as an impact.
   - The impact sensor IS may be attached to the driven object. A position where the impact sensor IS is attached to the driven object is determined depending on the type of the driven object or the type of impact to be detected by the impact sensor IS. For example, in a case where the impact sensor IS is attached to the arm 23 and detects an impact acting between the arm 23 and the boom 21, the impact sensor IS is attached to a portion of the arm 23 near the first arm end 23A.
- A plurality of impact sensors IS may be attached to the single driven object. For example, in a case where three impact sensors IS are attached to the arm 23, it is preferable that the impact sensors IS are attached at a position near the first arm end 23A of the arm 23, a position near the center of the arm 23 in the longitudinal direction of the arm 23, and a position near the second arm end 23B of the arm 23, respectively.
- The drive system 30 may include a notification unit connected to the control device 90. An example of the notification unit is an output terminal such as a display disposed in the cabin. The control device 90 may output the estimated value calculated by the load estimation unit 95 to the output terminal. After calculating the estimated value, the control device 90 may store the estimated value in the memory 91. For example, a maintenance worker performing maintenance on the excavator 100 may grasp the states of the plurality of drive units A by referring to the estimated values stored in the memory 91 during the maintenance.
- The control device 90 may calculate diagnostic information on the excavator 100 from the estimated values. For example, the control device 90 may estimate a timing for required maintenance of the excavator 100 by aggregating the estimated values of the plurality of speed reducers 50. The estimated values of the plurality of drive units A and the timing for the excavator 100 are associated with each other by, for example, a table created through simulation.
- Incidentally, a construction machine, which is a work machine disclosed in Japanese Patent Application Publication No. 2003-082707, uses an electric cylinder having a built-in speed reducer. The electric cylinder is provided in the construction machine to drive, for example, the boom, arm, and bucket. Further, Japanese Patent Application Publication No. 2019-049532 discloses a method for diagnosing an induction motor and a mechanical element connected to the induction motor. The diagnostic method obtains a torque value of the induction motor from electric current detected in the induction motor. The induction motor is diagnosed using the obtained torque value as a diagnostic index.

In the conventional work machines described above, an impact may be applied to the speed reducer or the driven object driven by the speed reducer even when electric power is not supplied to the electric motor. However, in the conventional drive system of the work machine, a load on the speed reducer or the driven object can be estimated only in a state where electric power is supplied to the electric motor.

From the viewpoint of estimating the load on the speed reducer or the driven object driven by the speed reducer, the warm-up process of the above embodiment is not essential even when electric power is not supplied to the electric motor. In this case, it is sufficient that the control device 90 is configured to be capable of executing the load estimation process.

### <Additional Embodiments>

A technical idea that can be grasped from the above embodiment and its modification examples is described in the following.

### <Additional Embodiment 1>

A drive system for a work machine, including:
an electric motor, the electric motor being a drive source for a rotating driven object; a speed reducer amplifying torque of the electric motor and outputting the amplified torque to the driven object;
a control device controlling supply of electric power to the electric motor; and an impact sensor detecting an impact,
wherein the control device executes a load estimation process for calculating an estimated value of a load on the speed reducer or the driven object, and
wherein, in the load estimation process, the control device calculates the estimated value based on the impact detected by the impact sensor when electric power is not supplied to the electric motor.

### <Additional Embodiment 2>

The drive system according to Additional Embodiment 1, wherein, when electric power is supplied to the electric motor, the control device calculates the estimated value based on a value of electric current supplied to the electric motor in the load estimation process.

### <Additional Embodiment 3>

The drive system according to Additional Embodiment 1 or Additional Embodiment 2, further including:
a battery supplying electric power to the electric motor; and
an auxiliary battery supplying electric power to the impact sensor, the auxiliary battery being provided separately from the battery.

### <Additional Embodiment 4>

The drive system according to any one of Additional Embodiments 1 to 3, wherein the impact sensor is an acceleration sensor that detects acceleration of the speed reducer or the driven object as the impact.

## Claims

1. A drive system for a work machine, comprising:
an electric motor;
a speed reducer coupled to the electric motor, the speed reducer amplifying torque of the electric motor and outputting the amplified torque to a driven object;
a control device controlling supply of electric power to the electric motor; and
a temperature sensor detecting a temperature of the speed reducer,
wherein the control device is configured to execute a warm-up process when the temperature detected by the temperature sensor is equal to or lower than a prescribed temperature, and
wherein, in the warm-up process, electric power is supplied to the electric motor to cause the electric motor to generate heat while maintaining a rotation angle of an output shaft of the speed reducer within a predetermined range.

2. The drive system for a work machine according to claim 1, wherein the speed reducer includes a housing,
wherein the electric motor includes a heat transfer shaft, the heat transfer shaft extending coaxially with an output shaft of the electric motor and passing through the output shaft,
wherein the heat transfer shaft extends into an interior of the housing, and
wherein thermal conductivity of the heat transfer shaft is higher than thermal conductivity of the output shaft of the electric motor.

3. The drive system for a work machine according to claim 2, wherein the heat transfer shaft is switchable between an inserted state in which a distal end of the heat transfer shaft is situated inside the housing and a non-inserted state in which the distal end is situated outside the housing, and
wherein the control device switches the heat transfer shaft to the inserted state during execution of the warm-up process.

4. The drive system for a work machine according to claim 1 to 3, further comprising
a thermal transistor interposed between the electric motor and the speed reducer,
wherein the thermal transistor is switchable between a high thermal conductivity state and a low thermal conductivity state, thermal conductivity of the thermal transistor in the high thermal conductivity state is higher than that of a material of the output shaft of the electric motor, and the thermal conductivity of the thermal transistor in the low thermal conductivity state is lower than the thermal conductivity in the high thermal conductivity state, and
wherein the control device switches the thermal transistor to the high thermal conductivity state during execution of the warm-up process.

5. The drive system for a work machine according to claim 1 to 4, further comprising: a brake device switchable between a restriction state in which the brake device contacts a restriction target shaft to restrict rotation of the restriction target shaft and an allowable state in which the brake device allows rotation of the restriction target shaft, the restriction target shaft being the output shaft of the electric motor or an output member of the speed reducer,
wherein the control device switches the brake device to the restriction state during execution of the warm-up process.

6. The drive system for a work machine according to claim 5, comprising:
a plurality of the electric motors; a plurality of the speed reducers corresponding to the plurality of the electric motors, respectively; and
a plurality of the temperature sensors corresponding to the plurality of the speed reducers, respectively,
wherein the control device executes the warm-up process for each of the electric motors independently.

7. The drive system for a work machine according to claim 5, further comprising:
a clutch mechanism interposed between the electric motor and the speed reducer, the clutch mechanism being switchable between a disengaged state in which the electric motor and the speed reducer are disconnected from each other and an engaged state in which transmission of torque from the electric motor to the speed reducer is allowed,
wherein the control device switches the clutch mechanism to the disengaged state during execution of the warm-up process.
